Europäisches Patentamt

European Patent Office

Office européen des brevets

(19)

(11) Veröffentlichungsnummer: **0 371 329**
**A2**

(12) # EUROPÄISCHE PATENTANMELDUNG

(21) Anmeldenummer: **89121176.5**

(22) Anmeldetag: **16.11.89**

(51) Int. Cl.5: **C01G 23/047, C01G 23/053**

(30) Priorität: **29.11.88 DE 3840195**

(43) Veröffentlichungstag der Anmeldung:
**06.06.90 Patentblatt 90/23**

(84) Benannte Vertragsstaaten:
**BE DE ES FR GB IT NL**

(71) Anmelder: **BAYER AG**

**D-5090 Leverkusen 1 Bayerwerk(DE)**

(72) Erfinder: **Verhoeven, Werner, Dr.**
**Epicealaan 3**
**B-2180 Kalmthout(BE)**
Erfinder: **De Cleyn, Rene, Dr.**
**Max-Herman-Lei 152**
**B-2130 Brasschaat(BE)**
Erfinder: **Thometzek, Peter, Dr.**
**Buschstrasse 169**
**D-4150 Krefeld(DE)**
Erfinder: **Köhler, Peter, Dr.**
**Bethelstrasse 10**
**D-4150 Krefeld(DE)**

(54) **Titandioxid, Verfahren zu seiner Herstellung und dessen Verwendung.**

(57) Die vorliegende Erfindung betrifft Titandioxid, ein Verfahren zu seiner Herstellung und seine Verwendung in glasartigen Emails und Schmelzglasuren als Trübungsmittel.

EP 0 371 329 A2

## Titandioxid, Verfahren zu seiner Herstellung und dessen Verwendung

Die vorliegende Erfindung betrifft Titandioxid, ein Verfahren zu seiner Herstellung und seine Verwendung in glasartigen Emails und Schmelzglasuren als Trübungsmittel.

Titandioxid wird als Farbpigment entweder durch Umsetzung von $TiCl_4$ mit $O_2$ oder durch Hydrolyse einer schwefelsäurehaltigen, wäßrigen Lösung von Titanylsulfat und nachfolgender Kalzinierung hergestellt.

Im Falle des Sulfatprozesses wird die Titandioxidhydrat-Suspension in einem Drehrohrofen bei Verweilzeiten von 5 bis 20 Stunden kalziniert. Der bei der Hydrolyse anfallende Niederschlag besteht aus feinen Teilchen mit einer spezifischen BET-Oberfläche von 50-500 $m^2/g$, die eine starke Agglomerierung während der Kalzinierung erfahren.

• Die sich durch Kalzinierung ergebenden Agglomerate bilden Teilchen von 0,1 bis 1,0 mm, die sich aus Primärteilchen von 0,2 bis 0,4 $\mu$m zusammensetzen. Dieses Material ist als Klinker oder auch als gemahlenes Pigment zur Einarbeitung in glasartige Emails oder Schmelzglasuren wenig geeignet, da es sich zusammenballt, wenn es in trockenem Zustand mit den übrigen Bestandteilen der Emailfritte gemischt wird, was zu einer unvollständigen und inhomogenen Lösung des Titandioxids während des Schmelzvorganges der Fritte führt.

In der deutschen Auslegeschrift 1 207 363 wird ein Verfahren zur Herstellung eines $TiO_2$-Produktes für die Einarbeitung in glasartigen Emails durch Kalzinierung von gefälltem Titandioxidhydrat beschrieben. Dabei wird ein gefälltes Titandioxidhydrat mit grober Teilchengröße, das aus Primärteilchen von 5 bis 20 $\mu$m besteht, mit einem gefällten Titandioxidhydrat feiner Teilchengröße, das aus Primärteilchen von vorwiegend unter 1 $\mu$m besteht, wie es bei der Herstellung von $TiO_2$-Pigmenten anfällt, gemischt, und die Mischung wird kalziniert. Der Nachteil dieses Verfahrens besteht darin, daß es aufgrund der zwei stark unterschiedlichen Titandioxidhydrate, die erst hergestellt werden müssen, sehr aufwendig wird. Weiterhin besteht der Nachteil derartig erhaltenem $TiO_2$ darin, daß es sich durch ein hohes Schüttgewicht von 1 bis 2 kg/l auszeichnet und eine niedrige spezifische Oberfäche von deutlich unter 1 $m^2/g$ aufweist, was zu geringer Reaktivität beim Aufschmelzen in der Fritte führt.

In der US-PS 2 721 787 werden freifließende, nichtstaubende Aggregate bestehend aus kalziniertem $TiO_2$ (Primärteilchengröße 0,2-0,3 $\mu$m, spezifische Oberfläche 4,5-9 $m^2/g$) und 0,1 bis 3 % eines anorganischen Bindemittels beschrieben. Diese Aggregate werden hergestellt, indem wäßrige Slurries aus hydroklassifizierten Titandioxidpigmenten, die aus der normalen Pigmentherstellung stammen, bei 150 bis 400 °C sprühgetrocknet werden. Der Nachteil dieses Verfahrens liegt darin, daß zuerst kalzinierte Titandioxidpigmente hergestellt werden müssen, die dann in Wasser zur Herstellung einer Slurry aufgenommen werden, um diese Slurry danach sprühzutrocknen, um die beanspruchten Aggregate zu erhalten.

In der deutschen Auslegeschrift 1 202 259 wird ein Verfahren zur Herstellung von $TiO_2$-Agglomeraten für Emailfritten beschrieben, indem geeignetes Titandioxid (0,2-0,7 $\mu$m Kristallitgröße) unter Zusatz eines hydrolysierbaren Metall- oder Siliciumhalogenids granuliert wird.

In der japanischen Anmeldung 85/220884 werden sphärische, feine $TiO_2$-Teilchen mit einem $TiO_2$-Sol gemischt, bei 50 °C sprühgetrocknet und bei Temperaturen über 500 °C kalziniert. Das $TiO_2$-Sol wird aus schwefelsäurehaltigem $TiO_2$-Hydrat erhalten, das mit Ammoniak neutralisiert, filtriert und gewaschen sowie mit konzentrierter Schwefelsäure peptisiert wird. Das erzeugte Produkt weist Korngrößen von 0,1 bis 50 $\mu$m auf und findet Anwendung in kosmetischen Erzeugnissen, Katalysatoren und Keramiken. Für die Einarbeitung in Emails ist es nicht geeignet. Im Fall einer Kalzination unterhalb 800 °C bleiben noch größere Mengen an Sulfat zurück, die beim Emaileinbrand zu rauhen, matten Emailoberflächen führen. Bei höheren Kalziniertemperaturen weisen die Pulverkörner eine zu große Härte auf, wodurch ihr Aufschlußverhalten in der Fritte unvollständig ist.

In der britischen Patentschrift 1 176 912 wird ein feinteiliger Anatas mit einem Sulfatgehalt von 0,45-1,2 %, bezogen auf $TiO_2$, einer BET-Oberfläche von 35 bis 55 $m^2/g$ und einer Primärteilchengröße von 0,025-0,05 $\mu$m beschrieben. Die Herstellung erfolgt durch Kalzinierung eines schwefelsäurehaltigen $TiO_2$-Hydrats bei 725 bis 760 °C und anschließender Mahlung. Verwendet wird das Produkt in der Photographie sowie in Kopierpapieren. Für die Emaileinarbeitung ist es aufgrund seines hohen Schwefelgehaltes, der zu rauhen, matten Oberflächen führt, sowie aufgrund seiner Feinteiligkeit, die Klumpenbildung in der Frittenrohstoffmischung und damit unvollständiges Lösen sowie Schlammbildung beim Erschmelzen der Fritte verursacht, nicht geeignet.

In der deutschen Offenlegungsschrift 1 592 428 wird Titandioxidhydrat oder vorzugsweise kleine Titandioxidteilchen in einer Flüssigkeit zur Förderung einer Agglomeration chemisch behandelt, die Teilchen zu Mikrokugeln von 1 bis 500 $\mu$m agglomeriert und die agglome rierten Mikrokugeln getrocknet und kalziniert. Die chemische Behandlung besteht aus einer Reaktion mit einer Mineralsäure, einer organ. Säure oder einer Base. Das Schüttgewicht der erhaltenen $TiO_2$-Pulver, die für die Verwendung als Katalysatorträger geeignet sind, liegt bei 0,8 bis 1,0 kg/l. Für die Einarbeitung in Email sind die Produkte nicht geeignet, da die einzelnen Granulatkörner durch die chemische Behandlung in Verbindung mit der anschließenden Agglomeration sehr dicht gepackt und hart werden, was zu einem schlechten und unvollständigen Aufschmelzen in der Emailfritte führt.

Aufgabe war es daher, ein geeignetes Titandioxid, das als Trübungsmittel für glasartige Emails und Schmelzglasuren eingesetzt werden kann, zur Verfügung zu stellen.

Es wurde nun gefunden, daß das erfindungsgemäße Titandioxid die obengenannten Anforderungen erfüllt. Dieses Titandioxid weist einen $TiO_2$-Gehalt von $\geq$ 87 Gew.-%, einen Sulfatgehalt von kleiner als 0,45 Gew.-%, vorzugsweise kleiner als 0,3 Gew.-%, jeweils bezogen auf $TiO_2$, einen Alkalioxidgehalt von kleiner als 0,5 Gew.-%, vorzugsweise kleiner als 0,2 Gew-%, bezogen auf $TiO_2$, einen Restwassergehalt von kleiner als 12 Gew.-%, bezogen auf $TiO_2$, eine BET-Oberfläche von 30 bis 500 $m^2$/g, ein Schüttgewicht von 0,2 bis 0,8 kg/l, eine Primärteilchengröße von 0,005 bis 0,1 $\mu$m und eine mittlere aggregierte Korngröße von 30 bis 500 $\mu$m auf und liegt in amorpher Form und/oder als kristalliner Anatas vor.

Der $TiO_2$-Gehalt der Granulate beträgt $\geq$ 87 Gew.-%, kann jedoch durch Temperaturbehandlung noch angehoben werden. Der Sulfatgehalt liegt bei weniger als 0,45 Gew.-%, vorzugsweise weniger als 0,3 Gew.-%, bezogen auf $TiO_2$. Höhere Gehalte an Sulfat wirken sich ungünstig auf die $TiO_2$-Rekristallisation beim Emaileinbrand aus und führen zu unregelmäßigen, matten Emaillierungen.

Der Gesamtgehalt an Alkalioxiden, insbesondere an Natrium- und Kaliumoxid, liegt unter 0,5 Gew.-%, vorzugsweise unter 0,2 Gew.-%, bezogen auf $TiO_2$. Höhere Anteile haben Einbußen in der Emailtrübung zur Folge. Ein Restwassergehalt bis zu 12 Gew.-%, bezogen auf $TiO_2$, beeinträchtigt die emailtechnischen Eigenschaften des Titandioxids nicht.

Die hohe BET-Oberfläche von 30 bis 500 $m^2$/g (Bestimmung der BET-Oberfläche nach DIN 66 131, Abschnitt 6. Oktober 1973; 5-Punkt-Methode, Meßgas: Stickstoff, Adsorption bei der Temperatur des siedenden Stickstoffs, Annahme des Flächenbedarfs eines Stickstoffmoleküls von 0,162 $nm^2$, Vorbehandlung: 1 Stunde Ausheizen im Stickstoffstrom bei 130 °C) und die geringe Primärteilchengröße von 0,005 bis 0,1 $\mu$m haben eine hohe Reaktivität und somit ein ausgezeichnetes Aufschlußverhalten des $TiO_2$ in der Emailschmelze zur Folge.

Die 30 bis 500 $\mu$m großen, sphärischen Aggregate zeigen ein einwandfreies Fließverhalten, kleben beim Mischen mit den übrigen Frittekomponenten nicht und weisen eine gute Stabilität auf, d.h. sie zerfallen beim Mischprozeß nicht in Feinkorn, was zu Verklumpungen und unvollständigen Aufschmelzen führen würde.

Die Aggregate verteilen sich beim Mischen sehr gleichmäßig in der Fritte und schmelzen anschließend vollständig und gleichmäßig auf.

In der abgeschreckten Fritte bilden die Partikel titandioxidreiche Nahbezirke, die im Anfangsstadium des Emailbrands als Keimzellen für die Titandioxidrekristallisation wirken. Im weiteren Verlauf des Emailbrands wird dann nahezu ausschließlich Anatas in geeigneter Kristallitgröße, isometrischer Form und gleichmäßiger Verteilung erzeugt, wodurch ein hohes Reflexionsvermögen bei ausgezeichneter Deckkraft erhalten wird.

In einer besonderen Ausführungsform enthält das Titandioxid vorzugsweise Oxide, Phosphate und/oder Silikate der Metalle Mg, Ca, Sr, Ba, Sn, Sb, Bi, Y, Zr, Zn, V, Nb, W und/oder Mo und/oder Oxide der Elemente P und/oder Si in einer Menge bis zu 10 Gew.-%, vorzugsweise bis zu 7 Gew.-%, bezogen auf Titandioxid. So verbessert beispielsweise ein Zusatz von $P_2O_5$ die $TiO_2$-Rekristallisation und somit die Trübung im Email, ein Zusatz von $WO_3$ den Farbton im Email. Überraschenderweise ist hierbei die ursprüngliche, räumliche Entfernung der Zusatzstoffe vom $TiO_2$-Korn für die nachfolgende $TiO_2$-Trübung von großer Wichtigkeit, d.h., ein Einbringen derselben Zusatzstoffe in derselben Menge direkt in die Fritte hätte einen weitaus geringeren Effekt zur Folge.

Das Titandioxid kann zusätzlich Bindemittel wie z.B. Wasserglas, Carboxymethylcellulosen und/oder Polyvinylalkohole und/oder Verflüssiger wie z.B. Polyphosphate und/oder Polyacrylate in einer Menge von jeweils 0,1 bis 5 Gew.-%, bezogen auf $TiO_2$, enthalten.

Gegenstand der Erfindung ist weiterhin ein geeignetes Verfahren zur Herstellung des erfindungsgemäßen Titandioxids, wobei gefälltes, säurehaltiges Titandioxidhydrat mit einer Base auf pH 7 bis 13 gebracht wird, gegebenenfalls eine 0,1 bis 10 stündige Erhitzung auf eine Temperatur zwischen 40 °C und Rückfluß erfolgt, filtriert und gewaschen wird, die überschüssige Base gegebenenfalls entfernt wird, eine Sprühtrocknung gegebenenfalls unter Zusatz von Hilfsstoffen erfolgt und sich gegebenenfalls eine Temperaturbehandlung bei 200 bis 800 °C, vorzugsweise 400 bis 600 °C, anschließt.

Die Basenbehandlung des säurehaltigen $TiO_2$-Hydrats hat das Ziel, die anhaftende Säure möglichst vollständig in das entsprechende Salz zu überführen, das anschließend ausgewaschen wird. Dabei begünstigt eine vorherige 0,1 bis 10 stündi-

ge Erhitzung des basebehandelten $TiO_2$-Hydrats auf eine Temperatur zwischen 40°C und Rückfluß die Salzentfernung.

In einer besonderen Ausführungsform kann das salzhaltige $TiO_2$-Hydrat vor Waschung einer Druckbehandlung unterworfen werden. Dies kann z.B. erfolgen, indem die Temperaturbehandlung in einem geschlossen Druckbehälter durchgeführt wird. Auch kann z.B. die Hochdruck-Entspannungs-Technik in geeigneten Apparaturen eingesetzt werden.

Die genannten Maßnahmen führen zu einer Verbesserung der Filtration und Fremdsalzauswaschung, was eine Verbesserung der emailtechnischen Eigenschaften des so behandelten Titandioxids zur Folge hat.

Im Anschluß an Filtration und Waschung wird die überschüssige Base vorzugsweise wieder größtenteils entfernt. Beim Einsatz von Natronlauge und/oder Kalilauge geschieht das, indem mit einer Säure wie z.B. Salz-, Salpeter- und/oder Phosphorsäure auf einen pH-Wert von 7 bis 2 gestellt wird und das entstandene Natrium-und/oder Kaliumsalz durch erneute Filtration und Waschen entfernt wird. Auch bei diesem Schritt sind Maßnahmen zur Verbesserung von Filtration und Waschung, wie Temperatur- oder Druckbehandlung möglich.

In einer weiteren bevorzugten Ausführungsform wird Ammoniak als Base eingesetzt. Das gebildete Ammoniumsalz kann ebenfalls nach einer pH-Wert-Einstellung auf 7 bis 2 mit Hilfe einer Säure und anschließender Filtration mit Waschung entfernt werden. Vorzugsweise läßt es sich aber auch durch eine Temperaturbehandlung nach Sprühtrocknung bei 400 bis 800°C entfernen, wobei dann der zweite Filtrationszyklus eingespart wird.

Dem gewaschenen, salzarmen Titandioxidhydrat können in einer bevorzugten Ausführungsform vor der Sprühtrocknung Hilfsstoffe in geeigneter Form zugegeben werden, die im Endprodukt vorwiegend als Oxide, Phosphate und/oder Silikate der Elemente Mg, Ca, Sr, Ba, Sn, Sb, Bi, Y, Zi, Zn, V, Nb, W und/oder Mo und/oder als Oxide der Elemente P und/oder Si in einer Menge bis zu 10 Gew.-%, vorzugsweise bis zu 7 Gew.-%, bezogen auf Titandioxid, vorliegen.

Bei den Hilfsstoffen handelt es sich um Salze der oben genannten Metalle wie Carbonate, Nitrate, Chloride, Fluoride, Silikate, Phosphate oder Oxide.

Auch Bindemittel wie z.B. Wasserglas, Carboxymethylcellulosen oder Polyvinylalkohole und/oder Verflüssiger wie z.B. Polyphosphate oder Polyacrylate können dem $TiO_2$-Hydrat vor der Kalzinierung in einer Menge von jeweils 0,1 bis 5 Gew.-% zugemischt werden.

Die Sprühtrocknung erfolgt bei einer Ablufttemperatur oberhalb 90°C, vorzugsweise oberhalb 140°C. Hierzu wird die salzarme $TiO_2$-Hydratsuspension gegebenenfalls mit Hilfsstoffen versetzt und mit einem Feststoffgehalt ≧ 25 Gew.-%, vorzugsweise ≧ 35 Gew.-% wahlweise über eine Ein- oder Mehrstoffdüse oder eine Zentrifugalzerstäuberscheibe in den Trocknungsturm eingetragen. Sowohl ein hoher Feststoffgehalt der Aufgabesuspension als auch eine hohe Trocknungstemperatur im Sprühtrockner wirken sich günstig auf die Granalienstabilität und somit auf die emailtechnische Verarbeitbarkeit des $TiO_2$ aus.

Durch eine anschließende Temperung des sprühgetrockneten Pulvers bei 200 bis 800°C, vorzugsweise 400 bis 600°C können der $TiO_2$-Gehalt und die Kornstabilität gegebenenfalls erhöht werden.

Als Ausgangsmaterial für das erfindungsgemäße Herstellungsverfahren dient vorzugsweise gefälltes, schwefelsäurehaltiges Titandioxidhydrat mit einer BET-Oberfläche zwischen 50 und 500 m²/g, wie es z.B. beim Pigmentherstellungsprozeß nach dem Sulfatverfahren anfällt.

Das erfindungsgemäße Titandioxid kann als Trübungsmittel bei der Herstellung von Emails oder Schmelzglasuren verwendet werden.

Nachfolgend wird die Erfindung anhand der Beispiele 1 und 2 näher erläutert, ohne daß diese eine Einschränkung darstellen.

Beispiel 1
___ _

Eine wäßrige Titandioxidhydratsuspension mit einem $TiO_2$-Gehalt von 25,5 Gew.-%, einem Sulfatgehalt von 7,5 Gew.-%, bezogen auf $TiO_2$, und einer BET-Oberfläche von 280 m²/g wird mit Natronlauge auf pH 8 gebracht, 1 Stunde auf 90°C erhitzt, filtriert und salzfrei gewaschen, in $H_2O$ resuspendiert, mit Salzsäure auf pH 4 gestellt, erneut filtriert und salzfrei gewaschen. Der Filterkuchen mit 40 Gew.-%igem Feststoffgehalt wird resuspendiert. Dieser Suspension werden 0,5 Gew.-% $P_2O_5$, bezogen auf $TiO_2$, zugesetzt und anschließend wird in einem Sprühtrockner mit Zentrifugalscheibenzerstäubung bei einer Ablufttemperatur von 170°C getrocknet.

Das erhaltene Produkt weist einen $TiO_2$-Gehalt von 92,0 Gew.-%, einen Sulfatgehalt von 0,2 Gew.-%, bezogen auf $TiO_2$, einen Alkaloxidgehalt von 0,1 Gew.-%, bezogen auf $TiO_2$, einen Chloridgehalt von 0,4 Gew.-%, bezogen auf $TiO_2$, einen $P_2O_5$-Gehalt von 0,5 Gew.-%, bezogen auf $TiO_2$, einen $H_2O$-Gehalt von 6,7 Gew.-%, bezogen auf $TiO_2$, eine BET-Oberfläche von 280 m²/g, eine Primärteilchengröße von 0,01 μm, ein Schnüttgewicht von 0,45 kg/l und eine mittlere aggregierte Korngröße von 80 μm auf und liegt als amorpher und kristalliner Anatas vor.

Das Produkt klebt nicht, ist freifließend und zeigt ein ausgezeichnetes Misch- und Aufschlußverhalten in einer Bortitanweißemailfritte. Nach Auftrag und Einbrand wird ein hohes Reflexionsvermögen, eine hohe Deckkraft und ein günstiger Farbton der Emaillierung erhalten.

## Beispiel 2

Eine Titandioxidhydratsuspension wie in Beispiel 1 beschrieben wird mit Ammoniak auf pH 8 gebracht, eine Stunde auf 60°C erhitzt, filtriert und salzfrei gewaschen. Der Rückstand wird in Wasser zu einer 35 Gew.-%igen Suspension aufgenommen. Anschließend wird in einem Sprühtrockner mit Düsenzerstäubung bei einer Ablufttemperatur von 140°C getrocknet und 30 Minuten bei 500°C nachgetempert. Das erhaltene Produkt weist einen $TiO_2$-Gehalt von 97 Gew.-%, einen Sulfatgehalt von 0,25 Gew.-%, bezogen auf $TiO_2$, einen $H_2O$-Gehalt von 1,7 Gew.-%, bezogen auf $TiO_2$, eine BET-Oberfläche von 115 $m^2/g$, ein Schüttgewicht von 0,6 kg/l, eine Primärteilchengröße von 0,03 $\mu$m und eine mittlere aggregierte Korngröße von 185 $\mu$m auf und liegt überwiegend als kristalliner Anatas vor.

Das Produkt klebt nicht, ist freifließend und zeigt ein ausgezeichnetes Misch- und Aufschlußverhalten in einer Bortitanweißemailfritte. Nach Auftrag und Einbrand wird ein hohes Reflexionsvermögen, eine hohe Deckkraft und ein günstiger Farbton der Emaillierung erhalten.

## Ansprüche

1. Titandioxid, dadurch gekennzeichnet, daß es einen Gehalt von ≥ 87 Gew.-% Titandioxid, einen Sulfat-Gehalt von ≤ 0,45 Gew.-%, vorzugsweise < 0,3 Gew.-%, bezogen auf $TiO_2$, einen Alkalioxid-Gehalt von < 0,5 Gew.-%, vorzugsweise < 0,2 Gew.-%, bezogen auf $TiO_2$, einen $H_2O$-Gehalt von < 12 Gew.-%, bezogen auf $TiO_2$, eine BET-Oberfläche von 30 bis 500 $m^2/g$, ein Schüttgewicht von 0,2 bis 0,8 kg/l, eine Primärteilchengröße von 0,005 bis 0,1 $\mu$m und eine mittlere aggregierte Korngröße von 30-500 $\mu$m aufweist und in amorpher Form und/oder als kristalliner Anatas vorliegt.

2. Titandioxid gemäß Anspruch 1, dadurch gekennzeichnet, daß es vorwiegend Oxide, Phosphate und/oder Silikate der Metalle Mg, Ca, Sr, Ba, Sn, Sb, Bi, Y, Zr, Zn, V, W und/oder Mo und/oder Oxide der Elemente P und/oder Si in einer Menge von bis zu 10 Gew.-%, bezogen auf $TiO_2$, enthält.

3. Verfahren zur Herstellung von Titandioxid nach einem der Ansprüche 1 oder 2 dadurch gekennzeichnet, daß säurehaltiges Titandioxidhydrat mit einer Base auf pH 7-13 eingestellt wird, gegebenenfalls eine 0,1 bis 10 stündige Erhitzung auf eine Temperatur zwischen 40°C und Rückfluß erfolgt, filtriert und gewaschen wird, die überschüssige Base gegebenenfalls entfernt wird, eine Sprühtrocknung, gegebenenfalls unter Zusatz von Hilfsstoffen, er folgt und sich gegebenenfalls eine Temperaturbehandlung bei 200 bis 800°C, vorzugsweise 400 bis 600°C anschließt.

4. Verfahren nach Anspruch 3, dadurch gekennzeichnet, daß schwefelsäurehaltiges $TiO_2$-Hydrat, daß nach Hydrolyse beim Pigmentherstellungsprozeß nach dem Sulfatverfahren mit einer BET-Oberfläche zwischen 50 und 500 $m^2/g$ anfällt, eingesetzt wird.

5. Verfahren nach Anspruch 3, dadurch gekennzeichnet, daß als Base Natronlauge und/oder Kalilauge eingesetzt und die überschüssige Base entfernt wird, indem mit einer Säure auf einen pH-Wert von 2-7 eingestellt und das entstandene Natrium- und/oder Kaliumsalz durch erneutes Filtrieren und Waschen entfernt wird.

6. Verfahren nach Anspruch 3, dadurch gekennzeichnet, daß als Base Ammoniak eingesetzt und das überschüssige Ammoniak und das entstandene Ammoniumsalz durch Temperaturbehandlung bei 400 bis 800°C entfernt werden.

7. Verwendung des Titandioxids gemäß Anspruch 1 und 2 als Trübungsmittel für glasartige Emails und Schmelzglasuren.